# EUROPEAN PATENT SPECIFICATION

(11) **EP 0 617 096 B1**
(45) Date of publication and mention of the grant of the patent: **28.01.1998**
(21) Application number: 94104735.9
(22) Date of filing: 24.03.1994
(51) Int. Cl.: C09D 5/14

(54) **Antifouling paint composition**
Antifäulnisfarbe
Composition de peinture antisalissure

(30) Priority: 25.03.1993 JP 66506/93; 14.07.1993 JP 174176/93
(43) Date of publication of application: 28.09.1994
(73) Proprietor: Dai Nippon Toryo Co., Ltd., Osaka (JP)
(72) Inventor: Tsuneta, Kazuyoshi, Nishinasuno-machi, Nasu-gun, Tochigi-ken (JP); Taki, Tohru, Nasu-gun, Tochigi-ken (JP); Iwase, Yoshiyuki, Nasu-gun, Tochigi-ken (JP); Nitta, Tomohisa, Nasu-gun, Tochigi-ken (JP)
(74) Representative: Wächtershäuser, Günter, Prof. Dr.

(56) References cited:
- FR-A- 2 514 771
- DATABASE WPI Week 9247, Derwent Publications Ltd., London, GB; AN 92385344 & JP-A-4 283 278 (DAINIPPON INK & CHEM.) 8 October 1992

## Description

The present invention relates to an antifouling paint composition containing, as a vehicle component, a resin having a polyester hydrolyzable in sea water grafted to a vinyl copolymer through or without through a polybasic carboxylic acid and/or its acid anhydride.

Various marine-organisms settle on the surface of exterior plates at the bottoms of ships, marine structures or fishing nets located below the sea water surface. This creates problems such that in the case of ships, efficient operation will thereby be hindered, and in the case of marine structures or fishing nets, the useful life will thereby be substantially shortened. As a measure to cope with such problems, it is common to employ underwater antifouling paints containing various antifouling agents.

Typical conventional antifouling paints include, for example, an insoluble matrix type antifouling paint having an antifouling agent incorporated to a vehicle component comprising a resin such as a vinyl resin, an alkyd resin or chlorinated rubber, which is insoluble in sea water and rosin which is soluble in sea water, and a soluble matrix type antifouling paint containing, as a vehicle component, a copolymer comprising, as a constituting component, a triorganotin-containing monomer which gradually undergoes hydrolysis in sea water, and having an antifouling agent incorporated, as the case requires.

However, with the insoluble matrix type antifouling paint which is designed to provide antifouling effects by dissolution of the antifouling agent together with rosin in sea water, constant antifouling effects for a long period of time can not be expected. Besides, after dissolution of rosin and the antifouling agent, the resin component insoluble in sea water will remain as a coating film and will form a skeleton structure. Thus, it has a drawback that especially when it is used for ships, the frictional resistance of the coated surface with the sea water increases to reduce the speed or to increase the costs for the fuel. On the other hand, the above-mentioned soluble matrix type antifouling paint has problems from the viewpoint of hygienic safety and protection of environment, although it has adequate antifouling effects.

Further, as an intermediate type between the above-mentioned two paints, an antifouling paint has recently been developed which contains, as vehicle components, a hydrolyzable polyester resin and a water-insoluble resin without using an organotin-containing resin (Japanese Examined Patent Publication No. 46501/1991 and Japanese Unexamined Patent Publication No. 23020/1992). When this antifouling paint contains, as vehicle components, a single condensate of an oxyacid such as lactic acid, and a water-insoluble resin, it makes a paint excellent from the viewpoint of hygienic safety and protection of environment, since it contains no organotin. However, it has a drawback that since a water-insoluble resin is used, the resin component insoluble in sea water will remain and will form a skeleton structure, in the same manner as the above-mentioned insoluble matrix-type antifouling paint.

Under the circumstances, an antifouling paint has been proposed wherein a single condensate of an oxyacid is used as the sole vehicle component. However, such as condensate has a difficulty that if it is made to have a high molecular weight at a level of a few tens thousands, it tends to be soluble only in a special organic solvent such as chloroform and insoluble in usual organic solvents for paints, and thus the coating operation and the paint-forming will be difficult. On the other hand, if the molecular weight is lowered to a level of not higher than 10,000, it will be soluble in conventional organic solvents for coating materials, but the hydrolytic rate in sea water is too high, and such a hydrolytic rate can not be controlled, whereby it is difficult to obtain antifouling effects for a long period of time.

It is an object of the present invention to overcome the above described drawbacks of conventional antifouling paints and to provide a paint composition which is capable of effectively preventing settlement of various marine-organisms on the surface of exterior plates at the bottoms of ships, marine structures or fishing nets located below the sea water surface, for a long period of time and which at the same time is excellent from the viewpoint of hygienic safety and protection of environment.

The present inventors have conducted a study to overcome the above-mentioned drawbacks and as a result have found that by using, as a vehicle component, a resin obtained by grafting a certain specific hydrolyzable polyester containing no organotin and being capable of controlling the hydrolytic rate to a vinyl copolymer through or without through a polycarboxylic acid and/or its acid anhydride, it is possible to obtain a paint composition which has a long lasting antifouling property and is excellent in the hygienic safety and protection of environment and which further is stable as a paint. The present invention has been accomplished on the basis of this discovery.

Thus, the present invention provides an antifouling paint composition containing, as a vehicle component, a resin obtained by grafting a hydrolyzable polyester (A) having (a) an oxyacid and/or its condensate, (b) a polybasic carboxylic acid containing no hydroxyl group and/or its acid anhydride and (c) a polyhydric alcohol reacted so that the equivalent ratio of the total hydroxyl groups in (a) and (c) to the total carboxyl groups in (a) and (b) is from 1/0.9 to 1/1.1, to a vinyl copolymer (B') containing, as a constituting component, at least 10 mol% of a polymerizable unsaturated monomer having a functional group reactive with a hydroxyl group in (A), said resin having free carboxyl groups blocked by a blocking agent so that the acid value is not higher than 20.

The present invention also provides an antifouling paint composition containing, as a vehicle component, a resin obtained by grafting a hydrolyzable polyester (A) having (a) an oxyacid and/or its condensate, (b) a polybasic carboxylic acid containing no hydroxyl group and/or its acid anhydride and (c) a polyhydric alcohol reacted so that the equivalent ratio of the total hydroxyl groups in (a) and (c) to the total carboxyl groups in (a) and (b) is from 1/0.9 to 1/1.1, to a vinyl copolymer (B") containing, as a constituting component, at least 10 mol% of a polymerizable unsaturated monomer having a hydroxyl group and/or a glycidyl group, through a polybasic carboxylic acid or its acid anhydride (C), said resin having free carboxyl groups blocked by a blocking agent so that the acid value is not higher than 20.

Now, the present invention will be described in detail.

Firstly, the hydrolyzable polyester (A) will be described.

The oxyacid (a) to be used in the present invention is a compound having a hydroxyl group and a carboxyl group in its molecule. Specific examples include lactic acid, glycolic acid, 2-hydroxyisobutyric acid, 3-hydroxybutyric acid, 4-hydroxybutyric acid, 16-hydroxyhexadecanoic acid, 2-hydroxy-2-methylbutyric acid, hydroacrylic acid, 10-hydroxystearic acid, 12-hydroxystearic acid, ricinolic acid, monohydroxyalkylphthalic acid, malic acid, citric acid, gluconic acid, mandelic acid, 2-hydroxy-2-methylpropionic acid, 3-hydroxyglutaric acid, salicylic acid, hydroxyphthalic acid and hydroxy-phenylacetic acid. These oxyacids may be used alone or in combination as a mixture of two or more of them. Further, self condensates of these oxyacids may be used just like oxyacids. Such a condensate preferably has a weight average molecular weight of at most 5,000. If required, a condensate having a small molecular weight such as a dimer or trimer of such an oxyacid, may be employed.

The polybasic carboxylic acid containing no hydroxyl group or its acid anhydride (b) to be used in the present invention may be selected for use among those commonly used for the production of polyesters. Specific examples include linear polybasic acids such as oxalic acid, succinic acid, succinic anhydride, adipic acid, azelaic acid and sebacic acid; aromatic polybasic acids such as phthalic acid, phthalic anhydride, isophthalic acid, terephthalic acid, tetrahydrophthalic anhydride, hexahydrophthalic acid, hexahydrophthalic anhydride, tetrabromophthalic anhydride, trimellitic acid, trimellitic anhydride, pyromellitic acid and pyromellitic anhydride; and unsaturated polybasic acids such as maleic acid, maleic anhydride, fumaric acid and itaconic acid. Further, a monobasic acid such as benzoic acid, p-tertbutylbenzoic acid or various animal or vegetable oil fatty acid may be used as a molecular weight regulating agent, as the case requires.

The polyhydric alcohol (c) to be used in the present invention may be selected for use among polyhydric alcohols commonly used for the preparation of polyesters. Specific examples include glycols such as ethylene glycol, propylene glycol, 1,3-butanediol, 1,6-hexanediol, diethylene glycol, neopentyl glycol and triethylene glycol, hydrogenated bisphenol A, bisphenol dihydroxypropyl ether, glycerol, trimethylol ethane, trimethylol propane and pentaerythritol.

The hydrolyzable polyester (A) of the present invention can be obtained by heating and reacting (a) the oxyacid and/or its condensate, (b) the polybasic carboxylic acid containing no hydroxyl group and/or its acid anhydride and (c) the polyhydric alcohol in the presence or absence of a catalyst at a temperature of from 180 to 230°C, while removing water. However, the process for producing this hydrolyzable polyester is not limited to the above method. For example, it may be a method wherein the polybasic carboxylic acid containing no hydroxyl group and the polyhydric alcohol are preliminarily reacted to obtain a prepolymer, which is then reacted with the oxyacid and/or its condensate.

When this hydrolyzable polyester (A) is produced, it is preferred that the proportion of (a) the oxyacid and/or its condensate is from 10 to 95 wt%, particularly from 15 to 90 wt%, based on the total weight of the (a) the oxyacid and/or its condensate, (b) the polybasic carboxylic acid containing no hydroxyl group and/or its acid anhydride and (c) the polyhydric alcohol. The equivalent ratio of the total hydroxyl groups in (a) the oxyacid and/or its condensate and (c) the polybasic alcohol to the total carboxyl groups in (a) the oxyacid and/or its condensate and (b) the polybasic carboxylic acid containing no hydroxyl group and/or its acid anhydride, is from 1/0.9 to 1/1.1.

With respect to the equivalent ratio, if the carboxyl groups are excessive beyond the above range, the graft ratio to the vinyl copolymer as described hereinafter decreases. On the other hand, if the carboxyl groups are too little, the terminals of side chains of the resin after the hydrolysis tend to be hydroxyl groups. Either case is not desirable.

The hydrolyzable polyester (A) preferably has a weight average molecular weight (hereinafter referred to simply as Mw) of from 200 to 50,000, more preferably from 500 to 10,000.

The hydrolyzable polyester (A) thus obtained is grafted to the vinyl copolymer through or without through a polybasic carboxylic acid and/or its acid anhydride, as described above. However, the grafted polyester main chain contains ester bonds of the oxyacid or its condensate (a) and thus undergoes hydrolysis at the ester bond sites under a weakly acidic or weakly alkaline environment, whereby free carboxyl groups always remain on the resin side of the main body, and the resin has a feature that it is soluble in water.

Now, the vinyl copolymer (B') to be used for the first embodiment of the present invention will be described. The vinyl copolymer (B') can be obtained by reacting a polymerizable unsaturated monomer mixture containing, as at least a constituting component, a polymerizable unsaturated monomer having a functional group such as a carboxyl group or an isocyanate group reactive with a hydroxyl group in the hydrolyzable polyester (A) to graft the hydrolyzable polyester (A), for example, in the presence of a radical polymerization initiator at a temperature of from 80 to 180°C for from 2 to 10 hours.

As the polymerizable unsaturated monomer containing a carboxyl group, an unsaturated monocarboxylic acid or an unsaturated dicarboxylic acid, such as (meth)acrylic acid, crotonic acid, maleic acid, fumaric acid, itaconic acid, phthalic acid, succinic acid or citraconic acid, or its acid anhydride, may be mentioned as a typical example.

As the polymerizable unsaturated monomer containing an isocyanate group, (meth)acryloyl isocyanate, isocyanate ethyl (meth)acrylate or m-isopropenyl-α,α-dimethylbenzyl isocyanate, may be mentioned as a typical example.

The vinyl copolymer (B') of the present invention is a copolymer of such a polymerizable unsaturated monomer having a functional group reactive with a hydroxyl group, with one or more of the following polymerizable unsaturated monomers. The latter polymerizable unsaturated monomers include, for example, (meth)acrylates such as methyl (meth)acrylate, ethyl (meth)acrylate, butyl (meth)acrylate, 2-ethylhexyl (meth)acrylate and lauryl (meth)acrylate; aromatic vinyl monomers such as styrene and vinyl toluene; hydroxyl group-containing vinyl monomers such as hydroxyethyl (meth)acrylate and hydroxypropyl (meth)acrylate; glycidyl group-containing vinyl monomers such as glycidyl (meth)acrylate and methylglycidyl (meth)acrylate; fluorine-containing vinyl monomers such as perfluorocyclohexyl (meth)acrylate, propylperfluorooctanesulfoneamideethyl (meth)acrylate, vinyl fluoride and vinylidene fluoride; nitrogen-containing vinyl monomers such as diethyl (meth)acrylamide and (meth)acrylamide; vinyl ether monomers such as vinyl ethyl ether and vinyl butyl ether; vinyl esters such as vinyl acetate and vinyl benzoate; and others such as as (meth)acrylic acid chloride, vinyl chloride, vinylidene chloride, (meth)acrylonitrile and γ-(meth)acryloxyalkyltrimethoxysilane.

The polymerizable unsaturated monomer having a functional group reactive with a hydroxyl group, is usually at least 10 mol%, preferably from 15 to 60 mol%. If the amount is less than 10 mol%, the hydrolyzability tends to be inadequate, and further the solubility of the remaining vinyl copolymer after the hydrolysis of the hydrolyzable polyester from the coating film, tends to be poor, whereby it tends to be difficult to perform the function as an antifouling paint adequately.

Mw of the vinyl copolymer (B') is usually from 1,000 to 100,000, preferably from 5,000 to 30,000.

The method for producing a resin by grafting the above-mentioned hydrolyzable polyester (A) to such a vinyl copolymer (B') may be a conventional method. However, it is usual to conduct the reaction at a temperature of from 80 to 200°C for from 2 to 15 hours in the presence of a catalyst.

The proportions for reaction of the hydrolyzable polyester (A) and the vinyl copolymer (B') are preferably such that the equivalent ratio of the hydroxyl groups of the former to the functional groups of the latter which are reactive with the hydroxyl groups, is from 1/1 to 1/10, more preferably from 1/1.5 to 1/8. Within this range of the equivalent ratio, a proper equivalent of the hydrolyzable polyester (A) can be grafted to the vinyl copolymer (B'), to provide a long lasting antifouling property.

Now, the vinyl copolymer (B") to be used for the second embodiment of the present invention will be described. The vinyl copolymer (B") has hydroxyl groups and/or glycidyl groups reactive with the carboxyl groups in the polybasic carboxylic acid, to graft the hydrolyzable polyester (A) thereto through a polybasic carboxylic acid and/or its acid anhydride (C). Accordingly, to produce such a vinyl copolymer (B"), a polymerizable unsaturated monomer mixture containing, as a constituting component, at least a polymerizable unsaturated monomer having a hydroxyl group and/or a glycidyl group, is reacted at a temperature of from 80 to 180°C for from 2 to 10 hours in the presence of e.g. a radical polymerization initiator.

As the hydroxyl group-containing polymerizable unsaturated monomer, hydroxyethyl (meth)acrylate hydroxypropyl (meth)acrylate, hydroxybutyl (meth)acrylate, 3-chloro-2-hydroxypropyl (meth)acrylate, di-2-hydroxyethyl fumarate or mono-2-hydroxyethylmonobutyl fumarate may be mentioned as a typical example.

As the above glycidyl group-containing polymerizable unsaturated monomer, glycidyl (meth)acrylate, methylglycidyl (meth)acrylate, glycidyl vinyl ether, an arylglycidyl ether, or 3,4-epoxycyclohexylmethyl (meth)acrylate may be mentioned as a typical example.

The vinyl copolymer (B") of the present invention is a copolymer of such a polymerizable unsaturated monomer having a hydroxyl group and/or a glycidyl group, with one or more of the following polymerizable unsaturated monomers. The latter polymerizable unsaturated monomers include, for example, (meth)acrylates such as methyl (meth)acrylate, ethyl (meth)acrylate, butyl (meth)acrylate, 2-ethylhexyl (meth)acrylate and lauryl (meth)acrylate; aromatic vinyl monomers such as styrene and vinyl toluene; fluorine-containing vinyl monomers such as perfluorocyclohexyl (meth)acrylate, propylperfluorooctanesulfoneamideethyl (meth)acrylate, vinyl fluoride and vinylidene fluoride; nitrogen-containing vinyl monomers such as diethyl (meth)acrylamide and (meth)acrylamide; vinyl ether monomers such as vinyl ethyl ether and vinyl butyl ether; vinyl esters such as vinyl acetate and vinyl benzoate; and others such as (meth)acrylic acid chloride, vinyl chloride, vinylidene chloride, (meth)acrylonitrile and γ-(meth)acryloxyalkyltrimethoxysilane.

The polymerizable unsaturated monomer having a hydroxyl group and/or a glycidyl group is usually at least 10 mol%, preferably from 15 to 60 mol%. If the amount is less than 10 mol%, the hydrolyzability tends to be inadequate, and the solubility of the remaining vinyl copolymer after the hydrolysis of the hydrolyzable polyester from the coating film, tends to be poor, whereby no adequate function as an antifouling paint can be obtained, such being undesirable.

Mw of the vinyl copolymer (B") is usually from 1,000 to 100,000, preferably from 5,000 to 30,000.

Now, the polybasic carboxylic acid and/or its acid anhydride (C) to be used for the second embodiment of the present invention will be described.

The polybasic carboxylic acid and/or its acid anhydride (C) provides a bridging function to graft the hydrolyzable polyester (A) to the vinyl copolymer (B").

Namely, the polybasic carboxylic acid and/or its acid anhydride (C) reacts with hydroxyl groups of the hydrolyzable polyester (A) and the hydroxyl groups and/or glycidyl groups in the vinyl copolymer (B"), whereby the hydrolyzable polyester (A) is grafted to the vinyl copolymer (B") through the polybasic carboxylic acid and/or its acid anhydride (C).

As such a polybasic carboxylic acid and/or its acid anhydride (C), the same one as the polybasic carboxylic acid containing no hydroxyl group and/or its acid anhydride (b), to be used for the preparation of the hydrolyzable polyester (A), can be used.

Such a resin obtainable from the hydrolyzable polyester (A), the vinyl copolymer (B") and the polybasic carboxylic acid and/or its acid anhydride (C), can be produced by any one of a method which comprises reacting (A), (B") and (C) simultaneously, a method which comprises reacting (A) and (C) and then reacting (B") thereto, and a method which comprises reacting (B") with (C) and then reacting (A) thereto. It is usually preferred to conduct the reaction at a temperature of from 80 to 220°C for from 5 to 15 hours by the above-mentioned methods.

The proportion of the hydrolyzable polyester (A) grafted to the vinyl copolymer (B") through the polybasic carboxylic acid (C) is usually from 10 to 100%, preferably from 15 to 80%, of the hydroxyl groups and/or glycidyl groups in the vinyl copolymer (B"). Within this range, a proper number of the hydrolyzable polyester (A) is grafted to provide a long lasting antifouling property.

The resin having the hydrolyzable polyester thus grafted to the vinyl copolymer through or without through the polybasic carboxylic acid and/or its acid anhydride, has free carboxyl groups. Therefore, when it is used by itself as a vehicle component of an antifouling paint, it is likely to react with a metallic antifouling agent such as cuprous oxide as described hereinafter and undergo gelation, whereby the storage stability of the paint will be poor.

Therefore, as the vehicle component to be used in the present invention, at least a part of said free carboxyl groups of the resin is required to be blocked by a blocking agent such as a hydroxyl group-containing compound such as methanol, ethanol or butyl alcohol; a glycidyl group-containing compound such as allyl glycidyl ether, butylglycidyl ether or phenylglycidyl ether; an isocyanate group-containing compound such as methyl isocyanate, ethyl isocyanate or hexamethylene diisocyanate; or an amino group-containing compound such as (di)ethylamine or (di)isopropylamine, to bring the acid value to a level of not higher than 20, preferably not higher than 5.

The free carboxyl groups may be blocked by the blocking agent as described above e.g. by applying blocking treatment to free carboxyl groups of the resin having the hydrolyzable polyester (A) already grafted to the vinyl copolymer (B') or the vinyl copolymer (B"). However, it is also possible to apply the blocking treatment to free carboxyl groups of the hydrolyzable polyester (A) before grafting, and then grafting it to the vinyl copolymer (B') or the vinyl copolymer (B"). The resin having free carboxyl groups thus blocked, has ester bonds of the oxyacid or its condensate in the polyester and is thus susceptible to hydrolysis at the ester bond sites, whereby it is soluble in water and at the same time it has a feature that since such a polyester is grafted on the vinyl copolymer, it is excellent in the adhesion i.e. the recoating property when an antifouling paint is overcoated afresh on the coating film remaining after the hydrolysis of the polyester.

The resin is diluted to a desired resin concentration with a solvent which may be an aromatic solvent such as toluene or xylene, a ketone solvent such as methyl ethyl ketone or methyl isobutyl ketone, an ester solvent such as ethyl acetate, butyl acetate or cellosolve acetate, an alcohol solvent such as butyl alcohol, or an ether solvent such as dioxane or tetrahydrofuran, and then used as a vehicle component of an antifouling paint.

The antifouling paint composition of the present invention may contain, in addition to the above resin as the vehicle component, a conventional antifouling agent, coloring pigment, filler, rosin, copper compound of a C₅₋₁₈ monobasic organic acid, solvent, plasticizer as well as various additives including a defoaming agent, a precipitation-preventing agent and a leveling agent, as the case requires.

The antifouling agent to be used in the present invention as the case requires, is not particularly limited. Specific examples include cuprous oxide, basic copper carbonate, copper thiocyanate, copper hydroxide, cuprous rhodanide, manganese ethylenebisdithiocarbamate, zincdimethyldithiocarbamate, 2-methylthio-4-t-butylamino-6-cyclopropylamino-s-triazine, 2,4,5,6-tetrachloroisophthalonitrile, N,N-dimethylchlorophenylurea, zincethylenebisdithiocarbamate, 4,5-dichloro-2-N-octyl-3(2H)isothiazolone, N-(fluorodichloromethylthio)phthalimide, N,N-dimethyl-N'-phenyl(N-fluorodichloromethylthio)sulfamide, tetramethylthiuramdisulfide, 2,4,6-trichlorophenylmaleimide and 2-pyridinethiol-1-oxide zinc salt. These antifouling agents may be used alone or in combination as a mixture.

The solvent to be used in the present invention as the case requires, may be the same as the above-described solvent for the resin.

The coloring pigment, filler, plasticizer and various additives which may be used in the present invention as the case requires, may be the same as those commonly used for antifouling paints.

The antifouling paint composition of the present invention may be prepared by mixing from 15 to 50 wt%, preferably from 20 to 30 wt%, of the above resin, from 20 to 70 wt%, preferably from 30 to 50 wt%, of the solvent, and from 0 to 45 wt%, preferably from 20 to 40 wt%, of the antifouling agent.

The antifouling paint composition of the present invention is prepared by mixing and dispersing the above resin and other components by mixing and dispersing them all at once or in a divided fashion by a conventional paint producing apparatus such as a ball mill or disper. The antifouling paint composition thus prepared may be coated directly or after adjusting the viscosity with a solvent, on e.g. ships or marine structures by airless spray coating, air spray coating, roller coating or brush coating, preferably in a thickness after drying of from about 30 µm to 300 µm, preferably from 80 µm to 200 µm.

By the present invention, an epoch-making antifouling paint has been obtained which has a long lasting antifouling property substantially equal to a soluble matrix type antifouling paint containing an organotin-containing resin as the vehicle component, whereby the hydrolytic rate of the coated film can be controlled, and which has no substantial problem from the viewpoint of the hygienic safety and protection of environment, since it contains no organotin-containing resin.

Now, the present invention will be described in further detail with reference to Examples. However, it should be understood that the present invention is by no means restricted to such specific Examples. In the Examples, "parts" and "%" mean "parts by weight" and "% by weight", respectively.

### Preparation of hydrolyzable polyester (A)-1

Lactic acid was charged into a flask and heated and reacted at 180°C for 6 hours to obtain an oxyacid condensate. 150 Parts of the oxyacid condensate, 62 parts of ethylene glycol and 148 parts of phthalic anhydride were charged into a flask, and heated and reacted at 220°C for 10 hours to obtain polyester (A)-1 having Mw of 4,000.

The equivalent ratio of the total hydroxyl groups in the oxyacid condensate and ethylene glycol to the total carboxyl groups in the oxyacid condensate and phthalic anhydride was 1/1. In the above reaction, the reaction was carried out while removing formed water.

### Preparation of hydrolyzable polyester (A)-2

Malic acid was charged into a flask and heated and reacted at 200°C for 8 hours to obtain an oxyacid condensate. 45 Parts of the oxyacid condensate, 76 parts of propylene glycol and 148 parts of phthalic anhydride were charged into a flask, and heated and reacted at 220°C for 14 hours to obtain polyester (A)-2 having Mw of 6,000.

The equivalent ratio of the total hydroxyl groups in the oxyacid condensate and propylene glycol to the total carboxyl groups in the oxyacid condensate and phthalic anhydride was 1/1.1. In the above reaction, the reaction was carried out while removing formed water.

### Preparation of hydrolyzable polyester (A)-3

Into a flask, 250 parts of lactic acid, 62 parts of ethylene glycol and 146 parts of adipic acid were charged, and heated and reacted at 180°C for 10 hours to obtain polyester (A)-3 having Mw of 3,000.

The equivalent ratio of the total hydroxyl groups in the oxyacid and ethylene glycol to the total carboxyl groups in the oxyacid and adipic acid was 1/1. In the above reaction, the reaction was carried out while removing formed water.

### Preparation of polyester (A)-4

Into a flask, 74 parts of phthalic anhydride, 73 parts of adipic acid and 62 parts of ethylene glycol were charged, and heated and reacted at 200°C for 12 hours to obtain polyester (A)-4 having Mw of 6,000.

The equivalent ratio of the total hydroxyl groups in the ethylene glycol to the total carboxyl groups in the phthalic anhydride and adipic acid was 1/1. In the above reaction, the reaction was carried out while removing formed water.

### Preparation of vinyl copolymer varnish (B')-1

Into a flask, 250 parts of xylene was charged and heated to 100°C. Then, a mixture comprising 37.5 parts of maleic anhydride, 112.5 parts of n-butyl acrylate, 100 parts of ethyl acrylate and 3 parts of azobisisobutyronitrile, was dropwise added thereto over a period of 3 hours. After the dropwise addition, the temperature was raised to 110°C, and the mixture was further reacted for 5 hours to obtain vinyl copolymer varnish (B')-1 having Mw of 8,000.

The amount of maleic anhydride in the total monomer was 17 mol%.

### Preparation of vinyl copolymer varnish (B')-2

Into a flask, 250 parts of xylene was charged and heated to 100°C. Then, a mixture comprising 50 parts of m-isopropenyl-α,α-dimethylbenzyl isocyanate, 125 parts of ethyl acrylate, 75 parts of methyl methacrylate and 5 parts of azobisisobutyronitrile, was dropwise added thereto over a period of 3 hours. After the dropwise addition, the temperature was raised to 110°C, and the mixture was further reacted for 5 hours to obtain vinyl copolymer varnish (B')-2 having Mw of 6,000.

The amount of m-isopropenyl-α,α-dimethylbenzyl isocyanate in the above total monomer was 11 mol%.

### Preparation of vinyl copolymer varnish (B')-3

Into a flask, 250 parts of xylene was charged and heated to 100°C. Then, a mixture comprising 75 parts of methacrylic acid, 100 parts of butyl acrylate, 75 parts of ethyl methacrylate and 3 parts of azobisisobutyronitrile, was dropwise added thereto over a period of 3 hours. After the dropwise addition, the temperature was raised to 110°C, and the mixture was further reacted for 6 hours to obtain vinyl copolymer varnish (B')-3 having Mw of 10,000.

The amount of methacrylic acid in the total monomer was 38 mol%.

### Preparation of vinyl copolymer varnish (B')-4

Vinyl copolymer varnish (B')-4 was prepared in the same manner as in the Preparation of the above vinyl copolymer (B')-1 except that 37.5 parts of maleic anhydride was changed to 9 parts, so that the amount of maleic anhydride in the total monomer was 6 mol%.

### Preparation of vinyl copolymer varnish (B'')-1

Into a flask, 200 parts of xylene was charged and heated to 100°C. Then, a mixture comprising 40 parts of glycidyl methacrylate, 100 parts of ethyl acrylate, 60 parts of methyl methacrylate and 3 parts of azobisisobutyronitrile, was dropwise added thereto over a period of 3 hours. The mixture was further reacted for 5 hours to obtain vinyl copolymer varnish (B'')-1 having Mw of 8,000.

The amount of glycidyl methacrylate in the total monomer was 15 mol%.

### Preparation of vinyl copolymer varnish (B")-2

Into a flask, 200 parts of xylene was charged and heated to 100°C. Then, a mixture comprising 60 parts of hydroxyethyl methacrylate, 40 parts of n-butyl acrylate, 100 parts of ethyl acrylate and 5 parts of azobisisobutyronitrile, was dropwise added thereto over a period of 3 hours. The mixture was further reacted for 5 hours to obtain vinyl copolymer varnish (B")-2 having Mw of 6,000.

The amount of hydroxyethyl methacrylate in the total monomer was 26 mol%.

### Preparation of vinyl copolymer varnish (B")-3

Into a flask, 200 parts of xylene was charged and heated to 100°C. Then, a mixture comprising 80 parts of glycidyl methacrylate, 30 parts of n-butyl acrylate, 90 parts of ethyl methacrylate and 2 parts of azobisisobutyronitrile, was dropwise added thereto over a period of 3 hours. The mixture was further reacted for 5 hours to obtain vinyl copolymer varnish (B")-3 having Mw of 10,000.

The amount of glycidyl methacrylate in the total monomer was 35 mol%.

### Preparation of vinyl copolymer varnish (B")-4

Into a flask, 200 parts of xylene was charged and heated to 110°C. Then, a mixture comprising 14 parts of glycidyl methacrylate, 120 parts of ethyl acrylate, 66 parts of methyl methacrylate and 5 parts of azobisisobutyronitrile, was dropwise added thereto over a period of 3 hours. The mixture was further reacted for 5 hours to obtain vinyl copolymer varnish (B")-4 having Mw of 6,000.

The amount of glycidyl methacrylate in the total monomer was 5 mol%.

### Preparation of resin vehicle I

Into a flask, 510 parts of hydrolyzable polyester (A)-1 and 148 parts of butanol were charged, then heated to 170°C and reacted for 8 hours while removing water. Then, 1,304 parts of vinyl copolymer varnish (B')-1 and 1 part of triethylamine were added thereto, and the mixture was reacted at 130°C for 5 hours to obtain resin vehicle I having Mw of 25,000 and an acid value of 15.

The reaction was carried out under such a condition that the equivalent ratio of the hydroxyl groups in the hydrolyzable polyester (A)-1 to the anhydride rings of carboxyl groups in the vinyl copolymer varnish (B')-1 was 1/1.

### Preparation of resin vehicle II

Into a flask, 510 parts of hydrolyzable polyester (A)-1 and 102 parts of hexanol were charged, heated to 170°C and reacted for 8 hours while removing water. Then, 2,004 parts of vinyl copolymer varnish (B')-2 and 1 part of triethylamine were added thereto, and the mixture was reacted at 130°C for 5 hours to obtain resin vehicle II having Mw of 18,000 and an acid value of 18.

The reaction was carried out under such a condition that the equivalent ratio of the hydroxyl groups in the hydrolyzable polyester (A)-1 to the isocyanate groups in the vinyl copolymer varnish (B')-2 was 1/1.

### Preparation of resin vehicle III

Resin vehicle III having Mw of 34,000 and an acid value of 17, was prepared in the same manner as in the preparation of resin vehicle II except that 510 parts of the hydrolyzable polyester (A)-1 was changed to 701 parts of hydrolyzable polyester (A)-2.

The reaction was carried out under such a condition that the equivalent ratio of the hydroxyl groups in the hydrolyzable polyester (A)-2 to the isocyanate groups in the vinyl copolymer varnish (B')-2 was 1/1.

### Preparation of resin vehicle IV

Into a flask, 534 parts of hydrolyzable polyester (A)-3 and 688 parts of vinyl copolymer varnish (B')-3 were charged and heated to 200°C over a period of 3 hours to remove the solvent. The reaction was further conducted for 8 hours while removing water. Then, 74 parts of butanol was charged, and the mixture was reacted at 170°C for 8 hours to obtain resin vehicle IV having Mw of 45,000 and an acid value of 18.

The reaction was carried out under such a condition that the equivalent ratio of the hydroxyl groups in the hydrolyzable polyester (A)-3 to the carboxyl groups in the vinyl copolymer varnish (B')-3 was 1/1.

### Preparation of resin vehicle V

Into a flask, 534 parts of hydrolyzable polyester (A)-3 and 138 parts of vinyl copolymer varnish (B')-3 were charged and heated to 200°C over a period of 3 hours to remove the solvent. The reaction was further continued for 8 hours while removing water. Then, 74 parts of butanol was charged, and the mixture was reacted at 170°C for 8 hours to obtain resin vehicle V having Mw of 32,000 and an acid value of 12.

The reaction was carried out under such a condition that the equivalent ratio of the hydroxyl groups in the hydrolyzable polyester (A)-3 to the carboxyl groups of the vinyl copolymer varnish (B')-3 was 1/5.

### Preparation of resin vehicle VI

Resin vehicle VI having Mw of 16,000 and an acid value of 40, was prepared in the same manner as in the preparation of resin vehicle II except that free carboxyl group were not blocked with hexanol.

### Preparation of resin vehicle VII

Resin vehicle VII having Mw of 22,000 and an acid value of 13, was prepared in the same manner as in the preparation of resin vehicle I except that instead of 1,304 parts of vinyl copolymer varnish (B')-1, 3,868 parts of vinyl copolymer varnish (B')-4 was used.

The reaction was carried out under such a condition that the equivalent ratio of the hydroxyl groups in the hydrolyzable polyester (A)-1 to the anhydride rings of carboxyl groups in the vinyl copolymer varnish (B')-4 was 1/1.

### Preparation of resin vehicle VIII

Resin vehicle VIII having Mw of 30,000 and an acid value of 17, was prepared in the same manner as in the preparation of resin vehicle II except that instead of 510 of hydrolyzable polyester (A)-1, 801 parts of polyester (A)-4 were used.

The reaction was carried out under such a condition that the equivalent ratio of the hydroxyl groups in the polyester (A)-4 to the isocyanate groups in the vinyl copolymer varnish (B')-2 was 1/1.

### Preparation of resin vehicle IX

Into a flask, 510 parts of hydrolyzable polyester (A)-1 and 74 parts of butanol were charged, heated to 170°C and reacted for 8 hours while removing water. Then, 73 parts of adipic acid was added thereto, and the mixture was reacted at 180°C for 5 hours. Then, 1,420 parts of vinyl copolymer varnish (B'')-1 was added thereto, and the mixture was reacted at 200°C for 10 hours to obtain resin vehicle IX having Mw of 18,000 and an acid value of 10.

### Preparation of resin vehicle X

Into a flask, 510 parts of hydrolyzable polyester (A)-1 and 102 parts of hexanol were charged, heated to 170°C and reacted for 8 hours while removing water. Then, 118 parts of succinic acid was added thereto, and the mixture was reacted at 180°C for 5 hours. Then, 876 parts of vinyl copolymer varnish (B")-2 was added thereto, and the mixture was reacted at 200°C for 12 hours to obtain resin vehicle X having Mw of 28,000 and an acid value of 13.

### Preparation of resin vehicle XI

Into a flask, 701 parts of hydrolyzable polyester (A)-2 and 74 parts of butanol were charged, heated at 170°C and reacted for 8 hours while removing water. Then, 73 parts of adipic acid was added thereto, and the mixture was reacted at 180°C for 5 hours. Then, 710 parts of vinyl copolymer varnish (B")-3 was added thereto, and the mixture was reacted at 200°C for 12 hours to obtain resin vehicle XI having Mw of 37,000 and an acid value of 16.

### Preparation of resin vehicle XII

Into a flask, 534 parts of hydrolyzable polyester (A)-3 and 74 parts of butanol were charged, heated to 170°C and reacted for 8 hours while removing water. Then, 148 parts of phthalic anhydride was added thereto, and the mixture was reacted at 180°C for 5 hours. Then, 1,420 parts of vinyl copolymer varnish (B'')-1 was added thereto, and the mixture was reacted at 200°C for 10 hours to obtain resin vehicle XII having Mw of 20,000 and an acid value of 9.

### Preparation of resin vehicle XIII

Into a flask, 701 parts of hydrolyzable polyester (A)-2 and 102 parts of hexanol were charged, heated to 170°C and reacted for 8 hours while removing water. Then, 73 parts of adipic acid was added thereto, and the mixture was reacted at 180°C for 5 hours. Then, 1,420 parts of vinyl copolymer varnish (B'')-1 was added thereto, and the mixture was reacted at 200°C for 10 hours to obtain resin vehicle XIII having Mw of 21,000 and an acid value of 10.

### Preparation of resin vehicle XIV

Into a flask, 510 parts of hydrolyzable polyester (A)-1 and 1,420 parts of vinyl copolymer varnish (B'')-1 were charged and reacted at 200°C for 10 hours to obtain resin vehicle XIV having Mw of 14,000 and an acid value of 7.

### Preparation of resin vehicle XV

Into a flask, 510 parts of hydrolyzable polyester (A)-1 and 74 parts of butanol were charged, heated to 170°C and reacted for 8 hours while removing water. Then, 73 parts of adipic acid was added thereto, and the mixture was reacted at 180°C for 5 hours. Then, 2,004 parts of vinyl copolymer varnish (B")-4 was added thereto, and the mixture was reacted at 200°C for 10 hours to obtain resin vehicle XV having Mw of 14,000 and an acid value of 8.

### Preparation of resin vehicle XVI

Into a flask, 801 parts of polyester (A)-4 and 74 parts of butanol were charged, heated to 170°C and reacted for 8 hours while removing water. Then, 73 parts of adipic acid was added thereto, and the mixture was reacted at 180°C for 5 hours. Then, 1,420 parts of vinyl copolymer varnish (B'')-1 was added thereto, and the mixture was reacted at 200°C for 10 hours to obtain resin vehicle XVI having Mw of 19,000 and an acid value of 12.

### EXAMPLE 1 to 10 and COMPARATIVE EXAMPLES 1 to 8

The compositions as identified in Tables 1 and 2 were respectively kneaded and dispersed to obtain antifouling paints of Examples 1 to 10 and Comparative Examples 1 to 8. Each of these antifouling paints was air spray coated on a steel plate coated with an anti-corrosive paint, so that the dried film thickness would be 150 µm, and then dried. In Comparative Example 1, the viscosity was so high that the product was useless as a paint.

The obtained test plate was subjected to an antifouling test and a test for measuring a decrease of the film thickness. The results are shown in Tables 3 and 4. Further, each fouling paint was subjected to a storage stability test, and the results are shown in Table 5.

The respective tests were conducted in accordance with the following methods.

### Antifouling test

At Toba Bay in Toba-shi, Mie-ken, Japan, the test plate was immersed in the sea, and the appearance of the coating film was observed.

### Evaluation standard:

- 5:: No deposition on the test plate was observed.
- 4:: Deposition of thin slime on the test plate was observed.
- 3:: Deposition of thick slime on the test plate was observed.
- 2:: Slight deposition of large size organisms was observed.
- 1:: Substantial deposition of large size organisms was observed.

### Test for measuring a decrease of the film thickness

The test plate was attached to a rotor with a circumferential speed of 15 knot and rotated in the sea, whereby the degree of decrease of the film thickness was measured every three months. The numerical value given in Table 4 is the difference (unit: µm) of the film thickness measured every three months as compared with the initial film thickness, as measured by a micrometer.

### Paint storage stability test

Each paint was stored in a constant temperature vessel at 50°C for 6 months, whereby the increase or decrease of the viscosity was measured.

### Evaluation standard:

- ○:: Increase or decrease within 5% as compared with the initial viscosity
- Δ:: Increase or decrease within 10% as compared with the initial viscosity
- ×:: Increase or decrease exceeding 10% as compared with the initial viscosity

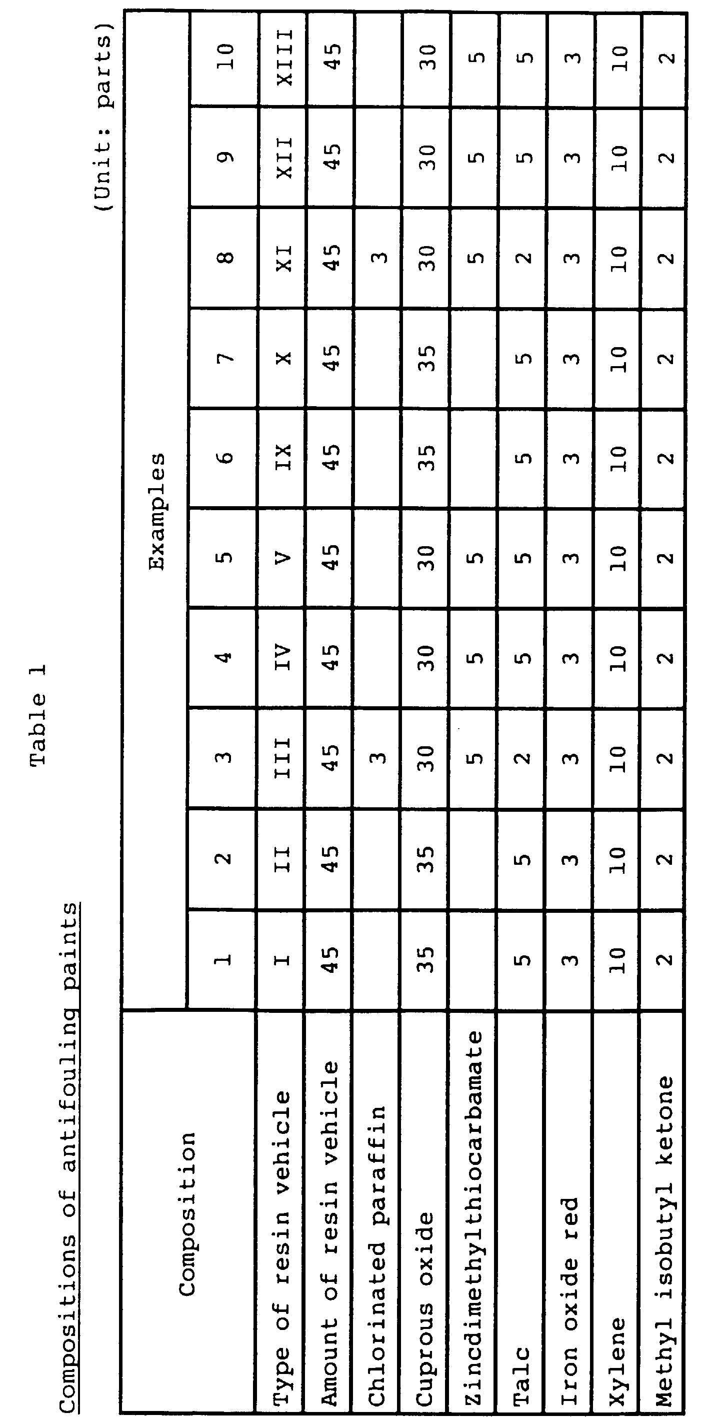

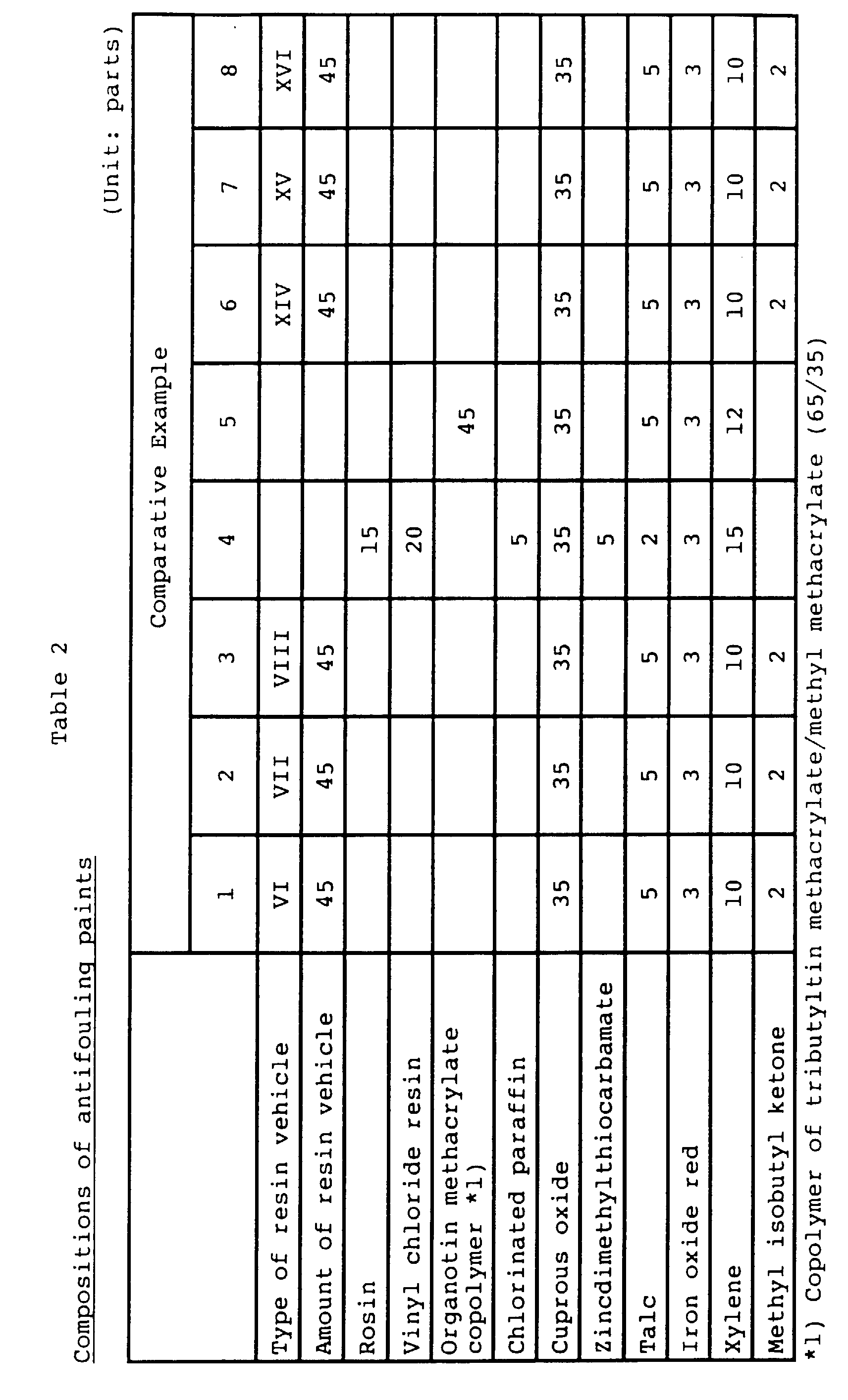

**Table 3**

| Results of the antifouling test | | | | | | | | |
|---|---|---|---|---|---|---|---|---|
| | Number of months immersed | | | | | | | |
| | 3 | 6 | 9 | 12 | 18 | 24 | 30 | 36 |
| Example 1 | 5 | 5 | 5 | 5 | 5 | 5 | 5 | 5 |
| Example 2 | 5 | 5 | 5 | 5 | 5 | 5 | 5 | 4 |
| Example 3 | 5 | 5 | 5 | 5 | 5 | 5 | 5 | 4 |
| Example 4 | 5 | 5 | 5 | 5 | 5 | 5 | 5 | 4 |
| Example 5 | 5 | 5 | 5 | 5 | 5 | 5 | 5 | 4 |
| Example 6 | 5 | 5 | 5 | 5 | 5 | 5 | 5 | 5 |
| Example 7 | 5 | 5 | 5 | 5 | 5 | 5 | 5 | 4 |
| Example 8 | 5 | 5 | 5 | 5 | 5 | 5 | 5 | 4 |
| Example 9 | 5 | 5 | 5 | 5 | 5 | 5 | 5 | 4 |
| Example 10 | 5 | 5 | 5 | 5 | 5 | 5 | 5 | 4 |
| Comparative Example 1 | - | - | - | - | - | - | - | - |
| Comparative Example 2 | 4 | 4 | 3 | 3 | 2 | 1 | 1 | 1 |
| Comparative Example 3 | 3 | 3 | 2 | 1 | 1 | 1 | 1 | 1 |
| Comparative Example 4 | 4 | 4 | 3 | 2 | 1 | 1 | 1 | 1 |
| Comparative Example 5 | 5 | 5 | 5 | 5 | 5 | 5 | 5 | 5 |
| Comparative Example 6 | 4 | 3 | 3 | 2 | 2 | Peeling | - | - |
| Comparative Example 7 | 4 | 4 | 3 | 3 | 2 | 1 | 1 | 1 |
| Comparative Example 8 | 3 | 3 | 2 | 1 | 1 | 1 | 1 | 1 |

**Table 4**

| Results of the test for measuring decrease of the film thickness | | | |
|---|---|---|---|
| | Number of months immersed | | |
| | 3 | 6 | 9 |
| Example 1 | 20 | 53 | 75 |
| Example 2 | 10 | 28 | 42 |
| Example 3 | 8 | 20 | 34 |
| Example 4 | 18 | 45 | 61 |
| Example 5 | 9 | 21 | 35 |
| Example 6 | 12 | 26 | 40 |
| Example 7 | 19 | 50 | 65 |
| Example 8 | 25 | 62 | 78 |
| Example 9 | 10 | 19 | 32 |
| Example 10 | 8 | 22 | 35 |
| Comparative Example 1 | - | - | - |
| Comparative Example 2 | 3 | 9 | 11 |
| Comparative Example 3 | 0 | 0 | 0 |
| Comparative Example 4 | 5 | 5 | 8 |
| Comparative Example 5 | 15 | 42 | 67 |
| Comparative Example 6 | 4 | 9 | Peeling |
| Comparative Example 7 | 3 | 7 | 10 |
| Comparative Example 8 | 0 | 0 | 0 |

**Table 5**

| Paint storage stability | | | | | | | | | |
|---|---|---|---|---|---|---|---|---|---|
| Examples | | | | | Comparative Examples | | | | |
| 1 | 2 | 3 | 4 | 5 | 1 | 2 | 3 | 4 | 5 |
| ○ | ○ | ○ | ○ | ○ | × | ○ | ○ | ○ | ○ |

As is evident from the test results of Tables 3, 4 and 5, the paints of Examples 1 to 10 of the present invention have antifouling properties substantially equal to the organotin type soluble matrix antifouling paint of Comparative Example 5 which used to have a problem from the viewpoint of hygienic safety. Further, the degree of decrease of the film thickness changes at a substantially constant rate as the paint composition of Examples 1 to 10 changes, which indicates that the solubility of the paint can be controlled.

On the other hand, in Comparative Example 1 wherein a resin having a high acid value was used as the vehicle, the storage stability was poor. Further, in Comparative Example 2 wherein a vinyl copolymer containing a less amount of a polymerizable unsaturated monomer having a functional group reactive with a hydroxyl group of the hydrolyzable polyester, was used, the antifouling performance was inadequate.

In Comparative Examples 3 and 8 in which resins having ordinary non-hydrolyzable polyesters grafted to vinyl copolymers, were used as the vehicles, the antifouling properties were poor.

In Comparative Example 6 in which a vinyl copolymer having no functional group reactive with a hydroxyl group, was grafted to a hydrolyzable polyester without through a polybasic carboxylic acid, peeling of the coated film was observed.

In Comparative Example 7 wherein a vinyl copolymer containing a less amount of a glycidyl group-containing monomer, was used, the antifouling performance was inadequate.

In Comparative Example 4 wherein the paint was a conventional insoluble matrix antifouling paint, the antifouling property for a long period of time was poor.

## Claims

1. An antifouling paint composition containing, as a vehicle component, a resin obtained by grafting a hydrolyzable polyester (A) having (a) an oxyacid with hydroxyl group and carboxyl group in its molecule and/or its condensate, (b) a polybasic carboxylic acid containing no hydroxyl group and/or its acid anhydride and (c) a polyhydric alcohol reacted so that the equivalent ratio of the total hydroxyl groups in (a) and (c) to the total carboxyl groups in (a) and (b) is from 1/0.9 to 1/1.1, to a vinyl copolymer (B') containing, as a constituting component, at least 10 mol% of a polymerizable unsaturated monomer having a functional group reactive with a hydroxyl group in (A), said resin having free carboxyl groups blocked by a blocking agent so that the acid value is not higher than 20.

2. The antifouling paint composition according to Claim 1, wherein the hydrolyzable polyester (A) is grafted to the vinyl copolymer (B') in such a ratio that the equivalent ratio of the hydroxyl groups in (A) to the functional groups in (B') reactive with the hydroxyl groups is from 1/1 to 1/10.

3. An antifouling paint composition containing, as a vehicle component, a resin obtained by grafting a hydrolyzable polyester (A) having (a) an oxyacid with hydroxyl group and carboxyl group in its molecule and/or its condensate, (b) a polybasic carboxylic acid containing no hydroxyl group and/or its acid anhydride and (c) a polyhydric alcohol reacted so that the equivalent ratio of the total hydroxyl groups in (a) and (c) to the total carboxyl groups in (a) and (b) is from 1/0.9 to 1/1.1, to a vinyl copolymer (B") containing, as a constituting component, at least 10 mol% of a polymerizable unsaturated monomer having a hydroxyl group and/or a glycidyl group, through a polybasic carboxylic acid or its acid anhydride (C), said resin having free carboxyl groups blocked by a blocking agent so that the acid value is not higher than 20, whereby the proportion of the hydrolyzable polyester (A) grafted to the vinyl copolymer (B") through the polybasic carboxylic acid (C) is from 10 to 100 % of the hydroxyl groups and/or glycidyl groups in the vinyl copolymer (B").

4. The antifouling paint composition according to any one of Claims 1 to 3, wherein the hydrolyzable polyester (A) is the one having (a), (b) and (c) reacted so that the content of (a) is from 10 to 95 wt% based on the total weight of (a), (b) and (c).

## Patentansprüche

1. Unterwasser-Farbzusammensetzung, enthaltend, als eine Trägerkomponente, ein Harz, erhalten durch Pfropfen eines hydrolysierbaren Polyesters (A) mit (a) einer Oxysäure mit Hydroxylgruppe und Carboxylgruppe in ihrem Molekül und/oder ihrem Kondensat, (b) einer mehrbasigen Carbonsäure ohne Hydroxylgruppe und/oder ihrem Säureanhydrid und (c) einem mehrwertigen Alkohol, die derart umgesetzt sind, daß das Äquivalentverhältnis der gesamten Hydroxylgruppen in (a) und (c) zu den gesamten Carboxylgruppen in (a) und (b) im Bereich von 1/0,9 bis 1/1,1 liegt, auf ein Vinylcopolymer (B'), enthaltend, als eine bildende Komponente, mindestens 10 Mol-% eines polymerisierbaren, ungesättigten Monomers mit einer funktionellen Gruppe, die mit einer Hydroxylgruppe in (A) reaktionsfähig ist, wobei freie Carboxylgruppen des Harzes durch ein Blockierungsmittel blockiert sind, so daß der Säurewert nicht höher als 20 ist.

2. Unterwasser-Farbzusammensetzung nach Anspruch 1, bei der der hydrolysierbare Polyester (A) auf ein Vinylcopolymer (B') in einem solchen Verhältnis gepfropft ist, daß das Äquivalentverhältnis der Hydroxylgruppen in (A) zu den funktionellen Gruppen in (B'), die mit den Hydoxylgruppen reaktionsfähig sind, von 1/1 bis 1/10 beträgt.

3. Unterwasser-Farbzusammensetzung, enthaltend, als eine Trägerkomponente, ein Harz, erhalten durch Pfropfen eines hydrolysierbaren Polyesters (A) mit (a) einer Oxysäure mit Hydroxylgruppe und Carboxylgruppe in ihrem Molekül und/oder ihrem Kondensat, (b) einer mehrbasigen Carbonsäure ohne Hydroxylgruppe und/oder ihrem Säureanhydrid und (c) einem mehrwertigen Alkohol, die derart umgesetzt sind, daß das Äquivalentverhältnis der gesamten Hydroxylgruppen in (a) und (c) zu den gesamten Carboxylgruppen in (a) und (b) im Bereich von 1/0,9 bis 1/1,1 liegt, auf ein Vinylcopolymer (B"), enthaltend, als eine bildende Komponente, mindestens 10 Mol-% eines polymerisierbaren, ungesättigten Monomers mit einer Hydroxylgruppe und/oder einer Glycidylgruppe, durch eine mehrbasige Carbonsäure oder ihr Säureanhydrid (C), wobei freie Carboxylgruppen des Harzes durch ein Blockierungsmittel blockiert sind, so daß der Säurewert nicht höher als 20 ist, worin der Anteil des hydrolysierbaren Polyesters (A), der durch die mehrbasige Carbonsäure (C) auf das Vinylcopolymer (B") gepfropft ist, von 10 bis 100% der Hydroxylgruppen und/oder Glycidylgruppen im Vinylcopolymer (B") beträgt.

4. Unterwasser-Farbzusammensetzung nach einem der Ansprüche 1 bis 3, worin der hydrolysierbare Polyester (A) derjenige ist, bei dem (a), (b) und (c) derart umgesetzt sind, daß der Gehalt von (a) von 1 bis 95 Gew.-%, bezogen auf das Gesamtgewicht von (a), (b) und (c), beträgt.

## Revendications

1. Composition de peinture antisalissure contenant, en tant que composant véhicule, une résine obtenue par greffage d'un polyester hydrolysable (A) obtenu par réaction (a) d'un oxyacide ayant un groupe hydroxyle et un groupe carboxyle dans sa molécule et/ou son produit de condensation, (b) d'un acide polycarboxylique ne contenant pas de groupe hydroxyle et/ou son anhydride d'acide, et (c) d'un polyalcool, de façon que le rapport équivalent des groupes hydroxyle totaux de (a) et de (c) aux groupes carboxyle totaux de (a) et de (b) soit de 1/0,9 à 1/1,1, à un copolymère vinylique (B') contenant, en tant que composant constituant, au moins 10 % en moles d'un monomère insaturé polymérisable ayant un groupe fonctionnel pouvant réagir avec un groupe hydroxyle de (A), ladite résine ayant des groupes carboxyle libres bloqués par un agent bloquant de façon que l'indice d'acide ne soit pas supérieur à 20.

2. Composition de peinture antisalissure selon la revendication 1, dans laquelle le polyester hydrolysable (A) est greffé au copolymère vinylique (B') selon un rapport tel que le rapport équivalent des groupes hydroxyle de (A) aux groupes fonctionnels de (B') pouvant réagir avec les groupes hydroxyle soit de 1/1 à 1/10.

3. Composition de peinture antisalissure contenant, en tant que composant véhicule, une résine obtenue par greffage d'un polyester hydrolysable (A) obtenu par réaction (a) d'un oxyacide ayant un groupe hydroxyle et un groupe carboxyle dans sa molécule et/ou son produit de condensation, (b) d'un acide polycarboxylique ne contenant pas de groupe hydroxyle et/ou son anhydride d'acide, et (c) d'un polyalcool, de façon que le rapport équivalent des groupes hydroxyle totaux de (a) et de (c) aux groupes carboxyle totaux de (a) et de (b) soit de 1/0,9 à 1/1,1, à un copolymère vinylique (B") contenant, en tant que composant constituant, au moins 10 % en moles d'un monomère insaturé polymérisable ayant un groupe hydroxyle et/ou un groupe glycidyle, par l'intermédiaire d'un acide polycarboxylique ou de son anhydride d'acide (C), ladite résine ayant des groupes carboxyle libres bloqués par un agent bloquant de façon que l'indice d'acide ne soit pas supérieur à 20, en conséquence de quoi la proportion du polyester hydrolysable (A) greffé au copolymère vinylique (B") par l'intermédiaire de l'acide polycarboxylique (C) est de 10 à 100 % des groupes hydroxyle et/ou des groupes glycidyle dans le copolymère vinylique (B").

4. Composition de peinture antisalissure selon l'une quelconque des revendications 1 à 3, dans laquelle le polyester hydrolysable (A) est celui obtenu par réaction de (a), (b) et (c) de façon que la teneur en (a) soit de 10 à 95 % en poids par rapport au poids total de (a), (b) et (c).
